Europäisches Patentamt

European Patent Office

Office européen des brevets

(11) Publication number: **0 170 736**
A1

# EUROPEAN PATENT APPLICATION

(21) Application number: **84304686.3**

(22) Date of filing: **09.07.84**

(51) Int. Cl.⁴: **G 01 M 3/38**, G 01 M 3/04

(43) Date of publication of application: **12.02.86**
**Bulletin 86/7**

(84) Designated Contracting States: **DE FR GB**

(71) Applicant: **Amon, Glen C., 8888 Governor's Row, Dallas Texas 75247 (US)**
Applicant: **Ardinger, Horace T. Jr., 9040 Governor's Row, Dallas Texas 75247 (US)**

(72) Inventor: **Moorehead, Robert Monte, 202 Hyde Park, Richardson Texas 75080 (US)**
Inventor: **Eppler, Susan Gene, 1321 East Spring Valley Road, Richardson Texas 75081 (US)**

(74) Representative: **Smith, Philip Antony et al, REDDIE & GROSE 16 Theobalds Road, London WC1X 8PL (GB)**

(54) **Pipeline fault status monitoring system.**

(57) Transmitters (16A, 16B ...) are arranged at intervals along the pipe line (10) to detect leaks by the effect of oil on an associated fibre optic loop (18A, 18B ....) The transmitters are coupled to a central station 20 by a common cable (14) and send asynchronous coded messages identifying their position and the fault status of the associated section of pipeline. Power is supplied to cable (14) by source (22) and the messages received at receiver (24) are decoded and analyzed and fault messages passed to printer/alarm (30).

## PIPELINE FAULT STATUS MONITORING SYSTEM

This invention relates generally to fault sensing alarm monitors and more particularly to a system for sensing malfunctions and/or potentially hazardous conditions occurring in a pipeline fluid distribution system, and to provide information as to the location of the fault condition in the system.

Pipelines have been a major source of spills over the years for both oil production and distribution. These problems could range from small flowline leaks to a break in the Alaskan pipeline. At the present time, typical known methods to detect an oil leak include:

1) Visual by air

2) Visual by walking

3) Flowmeters

The visual method, either on the ground or from the air, has obvious disadvantages such as when the view is obscured by trees or shrubs, or when inclement weather prevents viewing. These methods are also costly and time consuming. With current technology using flowmeters, a small leak in a large liquid or gas pipeline will not be detected due to equipment inaccuracies and a small leak in the wrong place at the wrong time can be tremendously expensive.

Therefore, a means is needed to detect a leak at any point along a pipeline in a highly reliable manner. At the outset it is recognized a few of the characteristics that the pipeline leak detector must have are:

1) High Reliability

2) Resistance to Hostile Environment (i.e., materials utilized must be relatively inert and components sealed)

3) Repairability/Maintainability

4) System Expandability

5) Adjustable System Accuracv

6) Ease of Installation (without specialized training)

Accordingly, it is an object of the present invention to provide a pipe malfunction sensing system which uniquely meets the above criteria.

The present invention is featured in the provision of a communication system composed of a number of small transmitters disposed along the expanse of pipeline, each with an associated malfunction sensing means which detects a fault condition occurring along the expanse of pipe between that transmitter and a next adjacent transmitter. The transmitters are serially connected by a common communications cable and are caused to provide status information to a central control station as to transmitter identification, pipeline status (i.e., leak information) as concerns the associate expanse of pipeline, and miscellaneous information as to temperature, pressure, etc.

A further object of the present invention is the provision of a new and useful fiber optic oil leak sensor for incorporation in the above defined communication system.

A still further object of the present invention is the provision of a pipeline malfunction monitoring system employing components easily attachable along the pipeline expanse.

These and further objects and features of the invention will become apparent upon reading the following description with reference to the accompanying drawings in which:

Figure 1 is a functional diagram of a pipeline fault monitoring system in accordance with the present invention;

Figure 2 is a functional block diagram of a typical transmitter assembly as employed in the system of Figure 1;

Figure 3 is a functional schematic depicting intermittent power control of the transmitter units in the monitoring system;

Figure 4 depicts the type of binary encoded signal developed by the transmitter encoders;

Figure 5 is a side view of transmitter mounting and interconnect detail on a pipeline to be monitored;

Figure 6 is a partial section view along line 6-6 of Figure 5, showing communication cable, sensing cable and mounting means; and

Figure 7 is a partial sectional view of oil sensing cable as may be employed with each of the transmitter assemblies on the monitoring system.

GENERAL DESCRIPTION OF THE INVENTION

The heart of the pipeline monitoring system to be described herein is a communication system composed of a plurality of small transmitter units which are serially connected by a communication cable and are attached to the pipeline at spaced locations over the entire length of the system to be monitored. These transmitting units provide status information to a central control station. The status information, as will be described, comprises transmitter identification for purposes of identifying the location of a particular fault being monitored, pipeline status for indicating that a particular status being monitored is normal or faulty, and miscellaneous information which might comprise temperature, pressure, etc.

Each of the transmitting units, as will be further described, is connected to a common twisted-pair communications cable and each of the transmitting units is associated with a sensor which detects the presence of pipeline fault condition along a section of the pipeline

-4-

between that transmitter and the next adjacent one of the transmitting units.

A central control station is placed at a convenient location for monitoring the overall status of the pipeline. The central control station receives the encoded messages from all of the transmitters over a shared communication cable and may automatically receive, decode and print out the pipeline status.

When a fault condition occurs in that section of the pipeline with which a particular one of the plural fault monitors is associated, the transmitting unit associated with that fault monitor responds to the fault condition defined by the monitor input thereto and the encoded message in that transmitting unit is changed to indicate a fault has been detected at that location in the pipeline expanse. The transmitter is then enreadied to send a new message to the central control station, whereupon the central control station receives and decodes the message and may provide means to activate an alarm and print out the transmitter identification code and location of the expanse of pipe in which the fault has occurred.

As will be further described, each of the transmitting units is adapted to transmit on an intermittent basis such that the transmissions from any one of the plural transmitters is not synchronous with those of the other transmitters in the system.

In the embodiment to be described, the fault monitoring comprises the detection of oil leaks in an oil carrying pipeline system and the fault sensor associated with each of the plural transmitter units comprises a novel optical oil sensor cable which extends from any one transmitter unit along the expanse of pipeline to the next succeeding one of the transmitter units, whereby each of the transmitter units monitors a particular length of pipeline and detects oil leakage over that associated length. As will be described, in this particular embodiment, each of the transmitting units comprises optical electronics which generates a light source for transmission through an optical fiber which extends the length of the pipeline section to be monitored and returns on itself in a continuous loop to be received by the optical electronics in the transmitting unit. The level of the received light is detected, with the level of the detected signal being definitive of whether there is oil leakage along that section of the optical cable associated with the transmitter unit.

In general, it will be seen that the attenuation characteristic introduced into the optical fiber loop by the presence of oil on the cable alters the transmission characteristics of the optical fiber and this information may be utilized to develop a fault annunciation which can be encoded and transmitted to the central control station.

## DETAILED DESCRIPTION OF THE INVENTION

The invention will now be described as it may be employed in detecting oil leaks in a pipeline distribution system, wherein the fault monitoring sensors associated with each of plural transmitting units comprises an optical fiber continuous loop carried by an optical cable to be defined, and sensitive to the presence of oil to exhibit an increased attenuation characteristic which can be detected and utilized as a fault annunciation. It is to be understood, however, that the inventive concept in general extends to the use of other than this type of fault sensor.

-6-

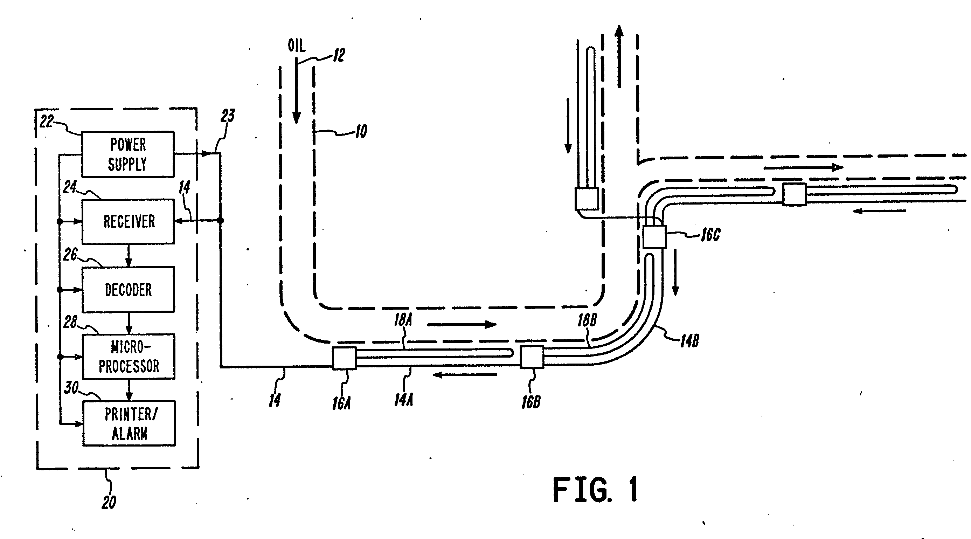

With reference to Figure 1, a pipeline fault monitoring system in accordance with the present invention is generally depicted. A pipeline network 10 carrying oil 12 is shown. A plurality of transmitter units such as 16a, 16b and 16c are shown to be disposed in space-separated relationship along the extent of the pipeline network. The transmitter/ sensor assemblies 16 are depicted in Figure 1 as being functionally interconnected serially along a common communication cable 14 and each of the transmitter/sensor assemblies 16 has associated therewith a fault sensing means depicted functionally in Figure 1 as respective optical fiber loops 18a, 18b, 18c, etc. Each of the sensor means 18 is seen to be associated with the extent of pipeline between successive ones of transmitter units 16. Thus, a sensor 18a is seen to extend from transmitter unit 16a along the pipeline 10 to the next succeeding transmitting unit 16b, etc. The common communications cable 14 is carried to a central control station 20 to receive transmissions from the transmitting units located along the extent of the pipeline network 10. It is noted that where branches may occur in the pipeline system, the communications cable 14 may simply be branched out with repeated transmitting units and associated sensing units then extending down the various branch lines.

As will be described, each of the transmitting units 16 is caused to intermittently transmit, on the common communications cable 14, a digitally encoded message which will indicate transmitter location, a fault/no fault monitoring status, along with other information as may be desired in the system. The central control station 20, as depicted in Figure 1, comprises a power supply 22 which, through interconnection 23, may be tied to the common communication cable 14 so as to deliver power to the individual transmitting units 16 placed along the pipeline network. Central control station 20 is shown as further comprising a receiver 24 with the input to the receiver 24 being the output from the common communications cable 14. The receiver 24 provides an output to a decoder unit 26 to decode the transmissions emanating from the plural transmitting units 16. The central control station further may comprise a microprocessor 28, which, in response to the output from the decoder 26, may operate a printer/alarm unit 30, such that when a transmitted message is received which comprises a fault condition, the printer/alarm 30 may be caused to print out the location of the transmitter from which the fault condition emanates and/or to sound an appropriate alarm to indicate that a fault condition has occurred in the pipeline network.

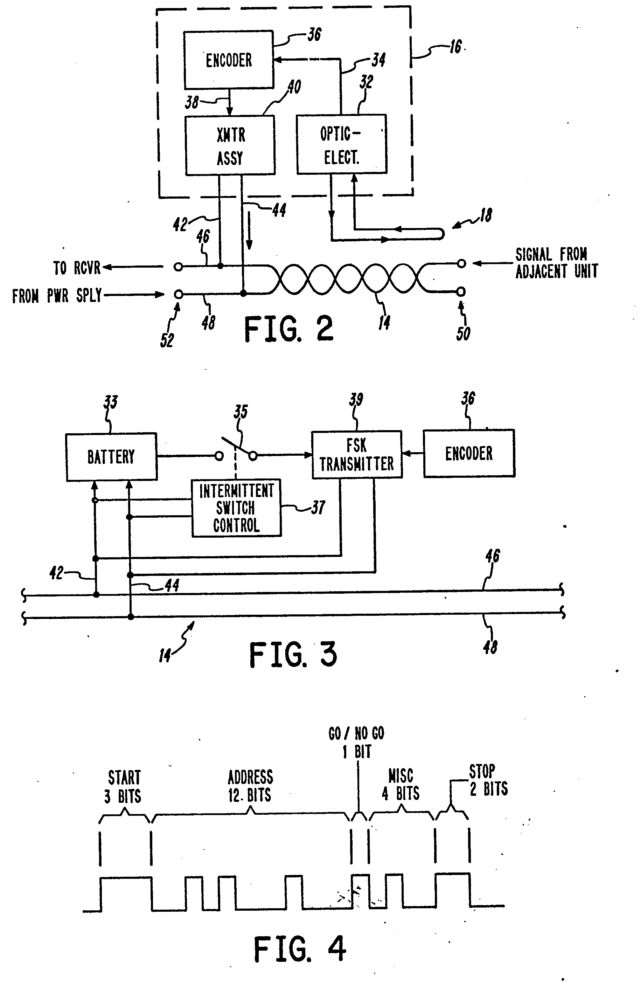

A typical transmitter/encoder assembly 16 is depicted functionally in Figure 2. Optical oil sensing cable 18, comprising the fault sensor means of the embodiment being described, is shown functionally as having transmitted, through an optical fiber loop, a light source emanating from optical electronics block 32 and returned to the optical electronics block 32. Optical electronics block 32 may conventially include an emitter which is a light source for the optical fiber loop and a detector which converts the light output of the fiber into an electrical signal. Such units are commercially available. The emitter may comprise a laser diode which has an output within the infrared spectrum (wavelength = 0.8 to 1.2 meters). The optical electronics 32 may then further comprise a threshold comparator means such that when the output from the detector falls below a predetermined threshold level, a fault condition is defined. The output from the optical electronics circuitry 32, which may comprise this threshold detection signal, is shown applied as input 34 to an encoder unit 36. As will be further described, encoder unit 36 provides an input 38 to transmitter 40 to cause the transmitter 40 to output on line pair (42 and 44) which lines are tied to the lines 46 and 48 which comprise the common communications cable 14; so as to transmit a predetermined signal back to the central control station 20.

As depicted in Figure 4, the encoder 36 associated with the transmitter unit 16 may provide a digital output signal exampled as three bits defining the start of a transmission sequence, twelve bits defining the address of the particular transmitter unit 16, one bit defining a go/no go condition as to whether there is a fault detected or not, four bits reserved for miscellaneous information such as temperature, pressure, etc., and two bits defining the stop of the transmission sequence. Each of the transmitter/encoder assemblies 16 may thus be provided with a unique 12-bit address which is the identification number for that transmitter.

Each transmitter/encoder assembly 16 may convert the binary bit stream from the encoder 36 to a frequency shift keying (FSK) transmission signal such as to transmit, on the common communication cable 14, audio frequencies of 2910 Hz and 2010 Hz which represent respectively a binary one and a binary zero. In this system, audio frequencies are preferably utilized to reduce attenuation which may become a problem with radio frequencies over long distances which may be encountered in such a monitoring system.

In accordance with the present invention, each of the transmitting units 16 would be caused to transmit on an intermittent basis; that is, transmissions from any one transmitter unit would not be synchronous in any manner with those from any other ones of the transmitting units. Reference is made to Figure 3 which functionally depicts a simple control system by means of which each of the transmitting units might be energized to transmit the then-encoded status and identification message. With reference to Figure 3, each transmitting unit 16 might be battery powered by means of a battery 33 which powers the FSK transmitter 39 through a control switch 35. Control switch 35 might be operated by any one of known types of intermittent switch control circuitries 37 so as to intermittently close the switch 35 to applied power from the battery 33 to the transmitter 39. As shown in Figure 3, a typical transmitter unit is shown tied to the common communication line 14 by means of interconnections 42 and 44. As previously described, with reference to Figure 1, the central control station may provide a power supply for use with the entire monitoring system, with the power being applied on the same two lines 46 and 48 that comprises the common communications cable to which the output of each FSK transmitter 39 is connected. Thus, power supplied on the lines 46 and 48 may be utilized to charge the battery 33, with the battery 33 supplying power through intermittent switch 35 to power the FSK transmitter. The intermittent switch control 37 might, for example, comprise a simple capacitor charging arrangement by means of which the switch 35 may be closed on an intermittent basis.

It is to be emphasized that the intermittent powering of the FSK transmitter 39 need not be on a periodic basis, since the system will operate on the improbability of more than one transmitter being powered at any one time. Thus, each transmission from a particular transmitter might be caused to be less than one-tenth second in length. The total

-10-

number of transmitters employed in a monitoring system will determine the time needed between transmissions from the same transmitter in order to decrease the probability of over-lapping signals. Should over-lapping occur, the receiver at the central control station may simply be caused to wait until a next succeeding transmission to read the status.

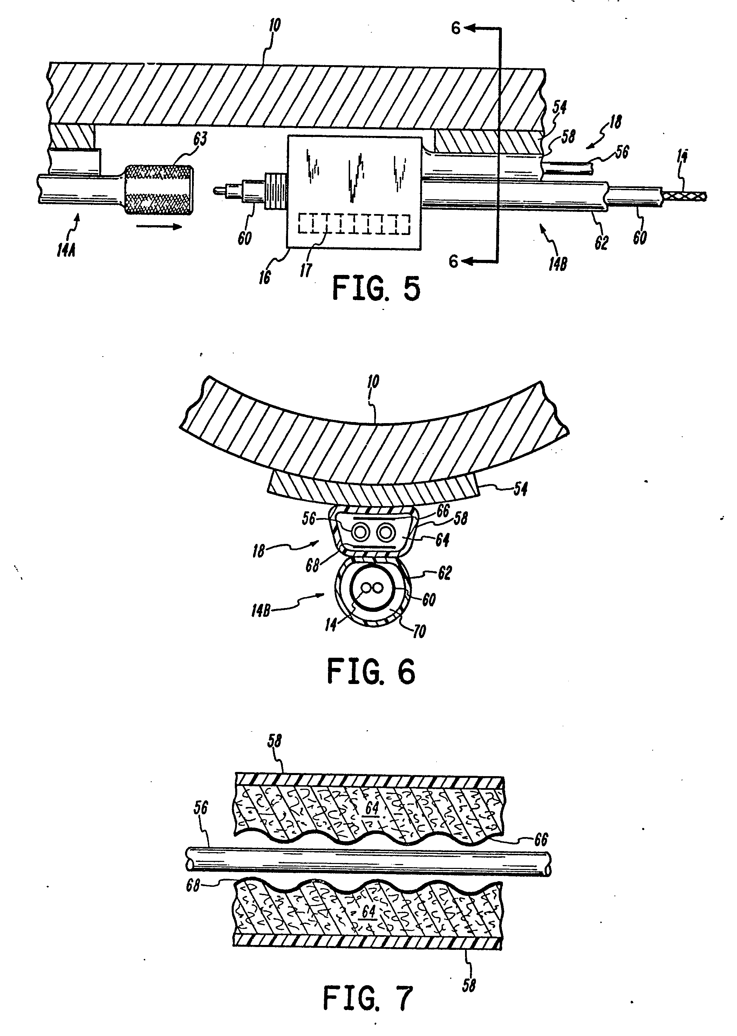

A physical layout of a monitoring arrangement in accordance with the present invention, utilizing an optical oil sensing cable, is shown in Figure 5. Figure 5 indicates the convenient manner in which successive ones of the transmitting units 16 and interconnecting cables may be disposed along the expanse of pipeline network being monitored. A typical transmitting unit 16 is indicated in Figure 5 as being integral with a length of communication cable 14b and an associated optical oil sensing cable 18. Common communication cable expanse 14b may comprise a twisted line-pair 14 surrounded by a shielded sleeve 60 carried within an outer impermeable covering 62 which may be foam filled. The optical oil sensing cable 18 carries an optical fiber loop 56 with the transmitter assembly 16 attached to the pipeline by means of a magnetic tape member 54 which is integrally affixed to the oil sensing cable 18 and the communications cable section 14b.

The optical oil sensing cable, as best depicted in Figure 6 and Figure 7, consists of an optical fiber loop 56 carried between two corrugated strip members 66 and 68 which are coextensive with the optical fiber loop. The optical fiber loop 56 and corrugated strips 66 and 68 are surrounded by oleophilic material 64 — all contained in a porous hydrophobic sleeve 58. When an oil leak occurs, the oil is absorbed into the cable through porous holes by the oleophilic material. This material expands when the oil is absorbed, forcing the two corrugated strips against the optical fiber loop 56 causing the optical fiber to bend into the corrugated pattern defined by strips 66 and 68. Thus, microbending is imparted to the optical fiber loop and the optical attenuation of the optical fiber 56 is increased, with an attendant reduction in light output from the loop as it is applied back to the optical electronics in the transmitter assembly 16.

As depicted in Figure 6, the optical oil sensing cable 18 is shown in integral relationship with the magnetic tape mounting member 54 and the common communications cable 14. Each transmitting assembly 16 may be fitted with a cable connector 60 by means of which the twisted-pair wires comprising common communications cable 14 may be connected to a mating connector 63 which terminates an adjacent section of cable 14 which connects to a preceeding transmitter unit 16. Figure 5 further illustrates a plurality of sealed encoding switches 17 which might be associated with each transmitter unit 16 to facilitate selection of address and other encoding desired for each unit.

It is contemplated that the oil sensing cable employing fiber optic loop 56 may be other than that described herein and depicted in Figure 6 and Figure 7. For example, although the described embodiment employs microbending for increasing attenuation characteristics, other principles associated with fiber optics technology might be employed as well. For example, it is known that optical fibers exhibit attenuation characteristics depending upon the difference between the index of refraction of the glass fiber and the media surrounding the glass fiber, such that other techniques might be employed to utilize increased attenuation characteristics to sense the presence of oil along the optical fiber loop.

-12-

The system described is seen to provide a monitoring means for detecting fault conditions along the expanse of a pipeline network which provides for fault annunciation, fault location data, and inherently provides a self test feature. Since the plural transmitters are caused to transmit intermittently whether a fault is sensed by an associated sensor or not, when a transmission has not been received from a particular transmitter during a period of time exceeding a normal cycle time, it is evident there is a problem existing with that transmitter. In addition, if no transmission has been received from transmitters beyond a certain point in the pipeline metwork, it is evident that there is a break in the common communications cable beyond that point.

Although the present invention has been described with respect to a particular embodiment thereof, it is not to be so limited, as changes might be made therein which fall within the scope of the invention as defined in the appended claims.

CLAIMS:

1. A fault monitoring system for a fluid distributing pipeline comprising a plurality of fault monitoring sensor means each associated with a predetermined different pipeline expanse, each said sensor means connected to an associated individual one of a plurality of signal transmitting means, each said transmitting means comprising modulator means responsive to said associated sensor means to develop a modulating signal indicative of a fault as sensed by the associated sensor means, and the location of that sensor means, control means for causing each of said transmitting means to intermittently transmit a message defining signal, with said intermittent transmissions being asynchronous with respect to transmissions from other of said transmitting means, and a common central receiving means for receiving said transmissions.

2. The monitoring system as defined in Claim 1, wherein each of said transmitting means comprises a signal encoder responsive to the associated one of said sensor means to develop a digitally encoded modulating signal comprising predetermined bits definitive of transmitter location and presence and absence of a fault as detected by said sensor means, means for frequency shift keying said transmitter means in accordance with said modulating signal to develop a signal output of first and second audio frequencies respectively definitive of binary ones and zeros defining said modulating signal, and means for connecting the output of each of said transmitting means to a common audio transmission line, with

0170736

-14-

said transmission line being inputted to said common receiving means.

3. The system as defined in Claim 2 wherein said fluid carried by said pipeline comprises oil, each said sensor means comprising a continuous optical fiber loop extending along the expanse of said pipeline between each said transmitting means and a next adjacent one of said transmitting means, said transmitting means comprising a light source emitter for transmitting light through said optical fiber and a light detector for receiving light passed through said fiber, said optical fiber being environmentally enclosed in a medium upon which oil leakage may impinge and responsive to oil impingement to exhibit an increased attenuation of light passing therethrough, each said signal encoder being responsive to said increased attentuation to alter the encoded output therefrom as applied to said transmitting means to effect an annunciation of said increased attenuation.

4. A fault monitoring system for an oil carrying pipeline comprising a plurality of encoded signal transmitting means disposed in space-separated relationship along the expanse of said pipeline, each of said signal transmitting means connected to an oil presence detection means which extends between that transmitting means and being juxtaposed with that intervening pipeline expanse, each said transmitting mean comprising control means activated in response to detection of oil by its associated oil presence detection means to output a transmitter location-encoded signal, and a central receiving means for receiving said location encoded signal.

5. The system defined in Claim 4 wherein each said oil presence detection means comprises a continuous loop of optical fiber through which a light beam is directed from the associated transmitter means and returned to said transmitter means, said transmitting means including optical detection means responsive to attenuation of said light beam returned to said transmitting means, to effect a predetermined output signal from said transmitting means, said optical fiber loop being encased in a volumetrically confined oleophilic material which expands in response to oil absorption to distort said optical fiber and thereby increase the attenuation of light passing through said optical fiber.

6. The system as defined in Claim 5 wherein each said transmitting means includes an encoder responsive to a predetermined attenuation of said light beam as returned to said transmitting means to effect a signal output from said transmitting means identifiably modulated to indicate said increased attenuation.

7. The system as defined in Claim 6, wherein said encoder develops a serial digital control signal having a predetermined number of bits indicative of the location of the associated transmitting means and a predetermined number of bits indicative of the presence or absence of said predetermined light beam attenuation, and means for modulating the signal output from that transmitting means in accordance with said encoder control signal.

8. The system as defined in Claim 4, wherein each of said transmitting means effects a signal output on an intermittent basis independently of the intermittent output of the other ones of said transmitting means, whereby the transmitting from said plurality of transmitting means are asynchronous.

9. The system as defined in Claim 4, wherein each said signal transmitting means is connected in parallel to a common 2-wire transmission line to which the output from each said signal transmitting means is connected and to which individual power supply means for each said signal transmitting means is connected, with said common transmission line being connected to the input of said central receiving means and to a power supply source associated with said central receiving means.

10. The system as defined in Claim 7, wherein said signal transmitting means include frequency shift keying means to effect output signals at first and second audio frequencies in response to respective first and second binary states of the binary control signal outputted by the associated one of said encoders.

11. The system as defined in Claim 5, wherein said optical fiber loop is enclosed in a cable with said optical fiber loop disposed between corrugated material strips surrounded by said oleophilic material, with a porous hydrophobic sleeve surrounding said oleophilic material.

12. The system as defined in Claim 6, wherein each said signal transmitting means comprises a light emitter having an output within the infrared spectrum, said emitter proceeding said light source for said optical fiber, and a detector connected to the return output of said optical fiber to convert the light output thereof into an electrical signal, said detector output being inputted to said transmitting means encoder.

FIG. 1

FIG. 2

FIG. 3

FIG. 4

0170736

FIG. 5

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 159 420 (A. TSUNODA) * Abstract; figures 4-7; column 7, line 58 - column 8 * | 1-3 | G 01 M 3/38 G 01 M 3/04 |
| X | US-A-4 270 049 (M. TANAKA et al.) * Figures 5, 6, 13, 14, 22, 25; claims 1, 4 * | 1-4 | |
| X | GB-A-2 062 877 (AVON RUBBER CO.) * Claims 1-3, 7-10; figures * | 1-3 | |
| A | DE-A-3 125 388 (BATTELLE-INSTITUT) * Claims 1, 3, 5-7, 9, 10, 12 * | 1-3 | |

- - - - -

TECHNICAL FIELDS SEARCHED (Int. Cl. 3)

G 01 M 3/04
G 01 M 3/38

The present search report has been drawn up for all claims

| Place of search | Date of completion of the search | Examiner |
|---|---|---|
| BERLIN | 10-10-1984 | KOEHN G |